# EUROPEAN PATENT APPLICATION

(11) **EP 4 386 593 A1**
(43) Date of publication of application: **19.06.2024**
(21) Application number: 22862797.2
(22) Date of filing: 14.06.2022
(51) Int. Cl.: G06F 21/53, G06F 16/27

(54) **DATA SHARING METHOD, NETWORK SIDE DEVICE, SYSTEM, ELECTRONIC DEVICE, AND STORAGE MEDIUM**

(30) Priority: 06.09.2021 CN 202111040184
(71) Applicant: ZTE Corporation, Shenzhen, Guangdong 518057 (CN)
(72) Inventor: ZENG, Ming, Shenzhen, Guangdong 518057 (CN); WANG, Dezheng, Shenzhen, Guangdong 518057 (CN); GUO, Haisheng, Shenzhen, Guangdong 518057 (CN); TU, Yaofeng, Shenzhen, Guangdong 518057 (CN); GAO, Hong, Shenzhen, Guangdong 518057 (CN)
(74) Representative: Boult Wade Tennant LLP
(86) International application number: PCT/CN2022/098771
(87) International publication number: WO 2023/029655

(57) **Abstract**

The present application relates to the field of data security. Disclosed are a data sharing method, a network side device, a system, an electronic device, and a storage medium. In the present application, the data sharing method includes: creating a sandbox for a data provider, and synchronising information on the sandbox to a second network side device, wherein the sandbox is bound to an original database, and the information on the sandbox includes metadata of the original database; receiving a sandbox access request initiated by a data application party and forwarded by the second network side device, wherein the sandbox access request carries metadata of request data; collecting, in the original database bound to the sandbox, original data queried on the basis of the metadata of the request data; and generating response data to the sandbox access request according to the collected original data, and notifying, by means of the second network side device, the data application party to acquire the response data from the sandbox.

## Description

### TECHNICAL FIELD

The present application relates to the field of data security, in particular to a data sharing method, a network side device, a system, an electronic device, and a storage medium.

### BACKGROUND

Today's society is in the era of rapid information growth, and sharing of data as a new commodity has become a new hot spot in today's technology and commerce. There is a large difference between data and conventional commodities, and the data has the feature of easy dissemination and copying. Whereas data may involve privacy of a large number of individuals and businesses, which places higher demands on both security reliability and traceability of the data sharing process. In the traditional data sharing process, there is a central approval link. Data flowing through a center has both the problem of unclear responsibility and the problem of data privacy leakage, which causes many organizations to be reluctant to share their own data to the outside. Blockchain is a database technology shared by multiple parties, the core of the technology is chain type storage of block data and smart contracts, and data can only be read and written but cannot be modified or deleted. Using blockchain technology to share data can not only ensure the credibility and traceability of transactions, but also improve transaction efficiency.

However, the inventors of the present application have found that for the blockchain technology, the data uploaded to the blockchain is disclosed to all users, so that the problem of data leakage exists when data containing private information is uploaded directly to the blockchain. At present, most blockchain platforms still fail to effectively protect private data, and there is still the risk of privacy leakage, which cannot guarantee the safety and reliability of data sharing.

### SUMMARY

The embodiments of the present application provide a data sharing method, applied to a first network side device, including: creating a sandbox for a data provider, and synchronizing information on the sandbox to a second network side device, wherein the sandbox is bound to an original database, and the information on the sandbox includes metadata of the original database; receiving a sandbox access request initiated by a data application party and forwarded by the second network side device, wherein the sandbox access request carries metadata of request data; collecting, in the original database bound to the sandbox, original data queried on the basis of the metadata of the request data; and generating response data to the sandbox access request according to the collected original data, and notifying, by means of the second network side device, the data application party to acquire the response data from the sandbox.

The embodiments of the present application provide a data sharing method, applied to a second network side device, including: receiving information on a sandbox synchronized by a first network side device, and providing the information on the sandbox for a data application party to query; forwarding a sandbox access request submitted by the data application party to the first network side device; and notifying the data application party to acquire response data from the sandbox after receiving a response data generation notification of the first network side device.

The embodiments of the present application further provide a network side device, including: a creating module, configured to create a sandbox for a data provider, and synchronize information on the created sandbox to a second network side device, wherein the sandbox is bound to an original database, and the information on the sandbox includes metadata of the original database; a receiving module, configured to receive a sandbox access request initiated by a data application party and forwarded by the second network side device, wherein the sandbox access request carries metadata of request data; a collecting module, configured to collect, in the original database bound to the sandbox, original data queried on the basis of the metadata of the request data; and a generating module, configured to generate response data to the sandbox access request according to the collected original data, and notify, by means of the second network side device, the data application party to acquire the response data from the sandbox.

The embodiments of the present application further provide a network side device, including: a receiving module, configured to receive information on a sandbox synchronized by a first network side device, and provide the information on the sandbox for a data application party to query; a forwarding module, configured to forward a sandbox access request submitted by the data application party to the first network side device; and a notifying module, configured to notify the data application party to acquire response data from the sandbox after receiving a response data generation notification of the first network side device.

The embodiments of the present application further provide a data sharing system, including: a first network side device and a second network side device that can implement the above data sharing method.

The embodiments of the present application further provide an electronic device, including: at least one processor; and a memory in communication connection with the at least one processor, wherein the memory stores instructions executable by the at least one processor, and the instructions, when executed by the at least one processor, enable the at least one processor to perform the data sharing method described above.

The embodiments of the present application further provide a computer-readable storage medium storing a computer program, wherein the computer program, when executed by a processor, implements the data sharing method described above.

### BRIEF DESCRIPTION OF THE DRAWINGS

One or more embodiments are illustrated by the corresponding figures in the drawings, which do not constitute a limitation on the embodiments. Elements with the same reference numerals in the drawings represent similar elements, and unless otherwise specified, the figures in the drawings do not constitute a scale limitation.
FIG. 1 is a flowchart of a data sharing method applied to a first network side device according to an embodiment of the present application;
FIG. 2 is an interaction diagram of a sandbox creation process involved in an embodiment of the present application;
FIG. 3 is a first interaction diagram of a data sharing process involved in an embodiment of the present application;
FIG. 4 is a second interaction diagram of a data sharing process involved in an embodiment of the present application;
FIG. 5 is a structural schematic diagram of a security sandbox system involved in an embodiment of the present application;
FIG. 6 is a flowchart of a data sharing method applied to a second network side device according to an embodiment of the present application;
FIG. 7 is a structural schematic diagram of a first network side device according to an embodiment of the present application;
FIG. 8 is a structural schematic diagram of a second network side device according to an embodiment of the present application; and
FIG. 9 is a structural schematic diagram of an electronic device according to one embodiment of the present application.

### DETAILED DESCRIPTION

In order to make the objects, technical solutions and advantages of the embodiments of the present application clearer, the embodiments of the present application will be described in detail below with reference to the accompanying drawings. However, a person having ordinary skill in the art can appreciate that in order to make readers better understand the present application, numerous technical details are set forth in the embodiments of the present application. However, even without these technical details and various changes and modifications based on the following embodiments, the claimed technical solution can be implemented.

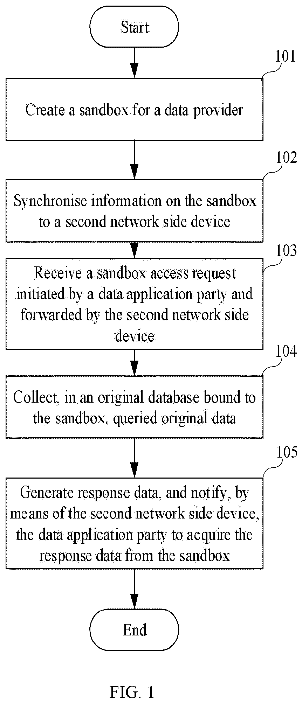

An embodiment of the present application relates to a data sharing method, applied to a first network side device, and a specific flow is shown in FIG. 1. In this embodiment, the first network side device is configured to create a sandbox for a data provider, and synchronize information on the created sandbox to a second network side device, wherein the sandbox is bound to an original database, and the information on the sandbox includes metadata of the original database; receive a sandbox access request initiated by a data application party and forwarded by the second network side device, wherein the sandbox access request carries metadata of request data; collect, in the original database bound to the sandbox, original data queried on the basis of the metadata of the request data; and according to the queried original data, generate response data so as to be acquired by application party by means of the second network side device.

The purpose of this embodiment is to provide a data sharing method for protecting privacy information of data and ensuring the security of the data sharing process.

The implementation details of the data sharing method in this embodiment are specifically described below, and the following contents are only to facilitate understanding of the implementation details of this solution, and are not necessary for implementing this solution. A specific flow is shown in FIG. 1, including at least, but not limited to, the following steps.

At step 101, a sandbox for a data provider is created. In this embodiment, the data provider provides data for sharing, and in this step, the first network device creates a sandbox for the data provider, and the sandbox serves as a safe and reliable environment for the data provider to store and process data.

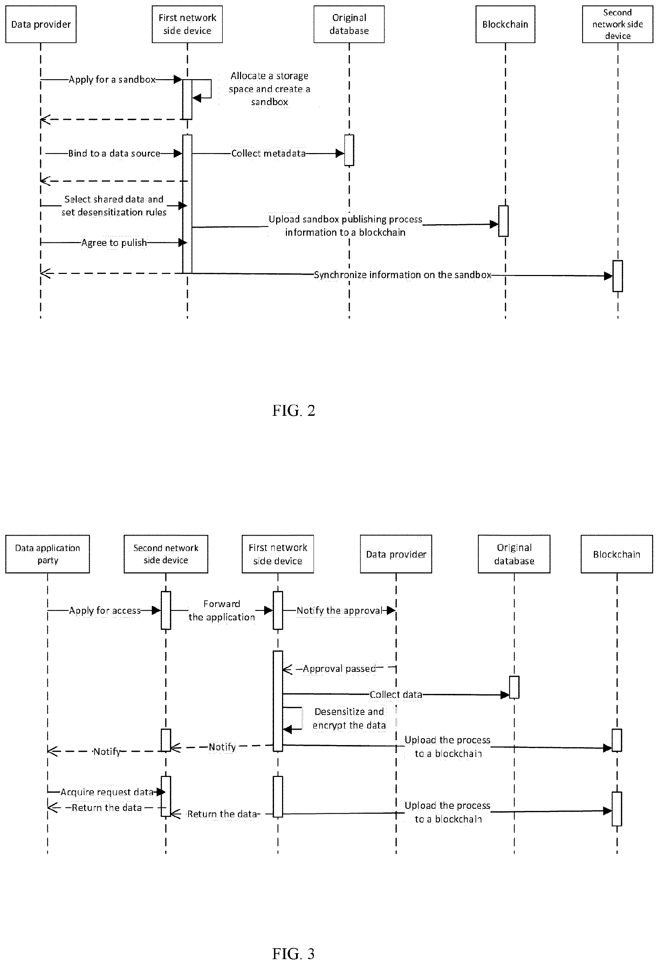

The process of the first network side device creating a sandbox for the data provider is shown in FIG. 2. Specifically, in this embodiment, the first network side device sets the service type of the sandbox according to the demand of the data provider. When creating a sandbox, the data provider binds the sandbox to the original database and configures the address, account number and password for accessing the original database. The data provider may further configure desensitization rules for the sandbox, and specifically may select semi-desensitization or full desensitization.

In one example, the first network side device determines a service type provided by the sandbox according to a sandbox creation request of the data provider, wherein the service type includes shared exchange and trusted computing; and creates a sandbox according to the selected service type. In addition, the space size and retention duration of the sandbox may be set. Besides the sandbox may be used as a secure and reliable environment for storing data, a sandbox providing a shared exchange service may provide processed data such as desensitized data and encrypted data for the data application party to acquire, while a trusted computing sandbox may provide a computing result of data of the data provider for the data application party to acquire.

In one example, after the sandbox configuration is completed, a user clicks OK to complete publishing of the sandbox. The first network side device applies for an independent storage space for the created sandbox, and mounts the sandbox on a path with the name of the sandbox as an intermediate directory, for storing shared data.

At step 102, information on the sandbox is synchronized to a second network side device. In this step, the information on the sandbox is synchronized to the second network side device, so that the second network side device can provide the information on the sandbox for the data application party to query.

In one example, after synchronizing the created sandbox to the second network side device, the first network side device uploads the sandbox publishing and synchronizing processes to a blockchain for storage, and the information uploaded to the blockchain includes: an identifier of the sandbox, an identifier of the data provider, metadata of the original database, etc. The sandbox publishing process is uploaded to the blockchain to ensure the traceability of the sandbox publishing process.

The blockchain referred to in this embodiment may be a common blockchain such as Hyperledger Fabric. The process of uploading to the blockchain for record in this embodiment relies on smart contracts.

At step 103, a sandbox access request initiated by the data application party and forwarded by the second network side device is received. If the data application party issues a sandbox access request to the second network side device, the second network side device forwards the sandbox access request to the first network side device. In this step, the first network side device receives the sandbox access request initiated by the data application party and forwarded by the second network side device, wherein the sandbox access request carries metadata of request data.

Specifically, the data application party queries the sandbox information provided by the data provider at the second network side device, herein the sandbox information includes metadata of the data provided by the data provider, and the data application party further issues a sandbox access request. The sandbox access request is forwarded by the second network side device to the first network side device, the first network side device receives the sandbox access request forwarded by the second network side device, and the sandbox access request carries metadata of the data requested by the data application party.

In one example, after receiving the sandbox access request initiated by the data application party and forwarded by the second network side device, the first network side device generates an approval form according to the sandbox access request initiated by the data application party and tells the data provider to approve the sandbox access request. Telling the data provider to make approval ensures that among shared data, only data permitted by the data provider can be queried by the data application party, thus avoiding private data from being leaked to all users.

At step 104, the queried original data is collected from the original database bound to the sandbox.

Specifically, after receiving the sandbox access request initiated by the data application party and forwarded by the second network side device, in this step, the first network side device queries, in the original database bound to the sandbox, the original data according to the metadata of the request data carried in the sandbox access request, and collects the original data queried on the basis of the metadata of the request data.

At step 105, response data is generated, and by means of the second network side device, the data application party is notified to acquire the response data from the sandbox.

Specifically, the first network side device generates response data of the sandbox access request according to the original data collected in the previous step, stores the generated response data in the sandbox at the same time, sends a response data generation notification to the second network side device, and tells, by means of the second network side device, the data application party to acquire the response data from the sandbox.

In one example, if the data application party requests to access a shared exchange sandbox, that is, the service type provided by the sandbox is shared exchange, then after the first network side device desensitizes the collected original data according to the desensitization rule configured by the data provider for the sandbox and encrypts the desensitized data with a public key of the data application party, i.e., the generation of response data is completed. The process of the data application party requesting to access the shared exchange sandbox and finally acquiring the response data is shown in FIG. 3.

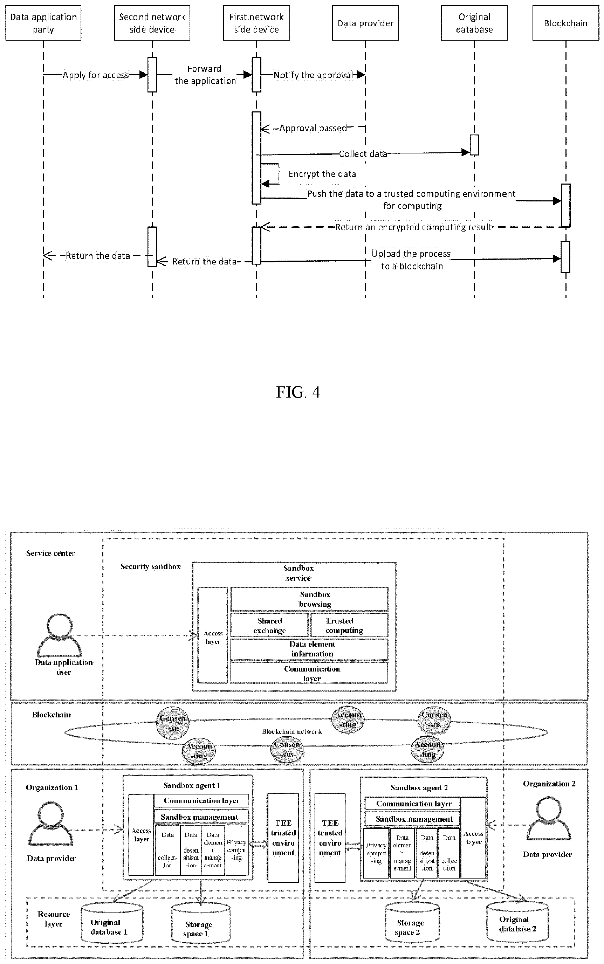

In another example, if the data application party requests to access a trusted computing sandbox, i.e., the service type provided by the sandbox is trusted computing, accordingly, the sandbox access request initiated by the data application party is to acquire a computing result of some or all of the data provided by the data provider. Then after the first network side device encrypts the collected original data, pushes the encrypted data to a trusted computing environment for trusted computing and encrypts the computing result with the public key of the data application party, i.e., the generation of the response data (computing result) is completed. The process of the data application party requesting to access the trusted computing sandbox and finally acquiring the response data (computing result) is shown in FIG. 4. The generated response data is encrypted all by using the public key of the data application party, and the request data can only be decrypted and finally acquired by the data application party with a private key, which can guarantee that the data cannot be acquired by the data application party unless being permitted by the data provider, thus further avoiding leakage of the data.

In one example, after generating the response data, the first network side device uploads the information in the data sharing process to the blockchain for record. The information uploaded to the blockchain includes an identifier of the data application party, an identifier of the sandbox, an identifier of the data provider, information of the response data, a signature of the data provider, and the like. The information is uploaded to the blockchain for record to ensure the traceability of the data sharing process. The information of the response data here may be a hash value of the shared data, or a data computing result.

The trusted computing environment involved in this embodiment provides trusted computing services, and aims at the scenario that the data application party requests to access a trusted computing sandbox. A secure channel is established between the trusted computing environment and the first network side device, the first network side device encrypts private data with the public key of the trusted computing environment and then through the secure channel, puts the private data into the trusted computing environment for computing, and the computing result is encrypted using the public key of the data application party and then returned.

The first network side device in this embodiment is oriented to the data provider, and is deployed in a server room of an organization or in a remote network. The first network side device may function as a sandbox agent module of a security sandbox system, and may specifically include an access layer, a communication layer, a sandbox management module, a data collection module, a data desensitization module, a data element management module, and a privacy computing module. The access layer is configured to provide the data provider with a human-computer interaction function for sandbox management and maintenance, which may be specifically in a command line manner or a user interface (UI) manner. The communication layer is configured to communicate with the second network side device via a Google Remote Procedure Call Protocol (GRPC protocol for short) interface, including uplink messages such as sandbox publishing. The sandbox management module is responsible for creating, managing and maintaining the sandboxes, and relies on the underlying privacy computing module, data desensitization module, data collection module, and data element management module to provide functional support. The data collection module is responsible for collecting original data. The data desensitization module is configured to desensitize the collected data fields according to configured desensitization rules. The data element management module is responsible for acquiring metadata information of shared data from the original database during the original database binding process, and storing and maintaining shared attributes and desensitization rules of shared fields. The privacy computing module establishes a secure channel with the trusted computing environment, and is responsible for putting the privacy data into the trusted computing environment for trusted computing according to the computing requirements applied by the user, encrypting a computing result and returning the encrypted computing result to the applying user.

The second network side device in this embodiment is oriented to the data application party, and may be deployed in a server room of a data providing organization or in a remote network. In addition, the first network side device and the second network side device may also be deployed in the same server of a central server room or a cloud environment. The second network side device may function as a sandbox service module of the security sandbox system, and may specifically include an access layer, a communication layer, a sandbox browsing module, a shared exchange module, a trusted computing module, and a data element information module. The access layer is configured to provide the data application party with a human-computer interaction function for sandbox access, which may be specifically in a command line manner or a UI manner. The communication layer is configured to communicate with the sandbox agent module via the GRPC protocol interface, including downlink messages such as sandbox querying, application sharing, application computing and result acquiring. The sandbox browsing module is configured to provide the data application party with the functions of accessing and applying for the sandbox and information query, and relies on the underlying shared exchange module, trusted computing module and data element information module to provide functional support. The shared exchange module is applied to a shared exchange sandbox, and provides the sandbox browsing module with the functions of accessing and applying for the shared exchange sandbox, and downloading shared files. The trusted computing module is applied to a trusted computing sandbox, which involves user privacy data. Since the original data cannot leave the space of the data provider, the trusted computing module provides the sandbox browsing module with the functions of applying for the computing tasks and acquiring the results of the trusted computing sandbox. The data element information module is configured to acquire metadata of the sandbox from the first network side device, and provide the metadata of the sandbox for the sandbox browsing module.

The blockchain, the first network side device (sandbox agent module), the second network side device (sandbox service module), the trusted computing environment, the smart contract and service interfaces involved in this embodiment constitute the secure sandbox system. The security sandbox system employs a distributed architecture that can be deployed at physical nodes or in the form of tenants in the cloud environment. The connection structure of parts in the security sandbox system is shown in FIG. 5. The sandbox agent module communicates only with the sandbox service module, and the sandbox agent modules do not communicate and are isolated from each other. The sandbox agent module registers with the sandbox service module after startup.

In one example, the blockchain environment and the trusted computing environment are deployed prior to deployment of the second network side device (sandbox service module). Then, the certificate is placed under the cert certificate directory, and the smart contract that needs to be installed is placed under the corresponding language directory under the contracts directory; a config/config.yaml configuration file is modified, a docked blockchain platform type is set, and the locally stored DB address is replaced; the config/config.yaml configuration file is modified to complete the relevant configuration of the locally docked blockchain platform, and a fabric configuration platform includes organization name, peer and orderer addresses and certificate configuration; a service init command is executed to start a sandbox service program; and sandbox smart contracts are installed and deployed.

In another example, the first network side device (sandbox agent module) is deployed. An agent program is deployed to a server environment of an organization, the certificate is placed under the cert certificate directory, and the smart contract that needs to be installed is placed under the corresponding language directory under the contracts directory; the config/config.yaml configuration file is modified, the docked blockchain platform type is set, and the locally stored DB address is replaced; the config/config.yaml configuration file is modified to complete the relevant configuration of the locally docked blockchain platform, and fabric configuration platform includes organization name, peer and orderer addresses and certificate configuration; the agent-service ip:port/<sandbox service id> command is executed to start the sandbox agent program; and sandbox smart contracts are installed and deployed.

In this embodiment, the first network side device creates the sandbox for the data provider as the secure trusted environment for data storage and processing. When creating the sandbox, the first network device only collects the metadata of the data provider, and does not need to acquire the original data, which can avoid leakage of private information caused by the disclosure of the original data. In addition, the request data generated according to the request of the data application party is acquired by the data application party via the second network side device, which can further ensure that the data is not leaked and ensure the safety and reliability of the data sharing process compared with the sharing method of disclosing the data to all users.

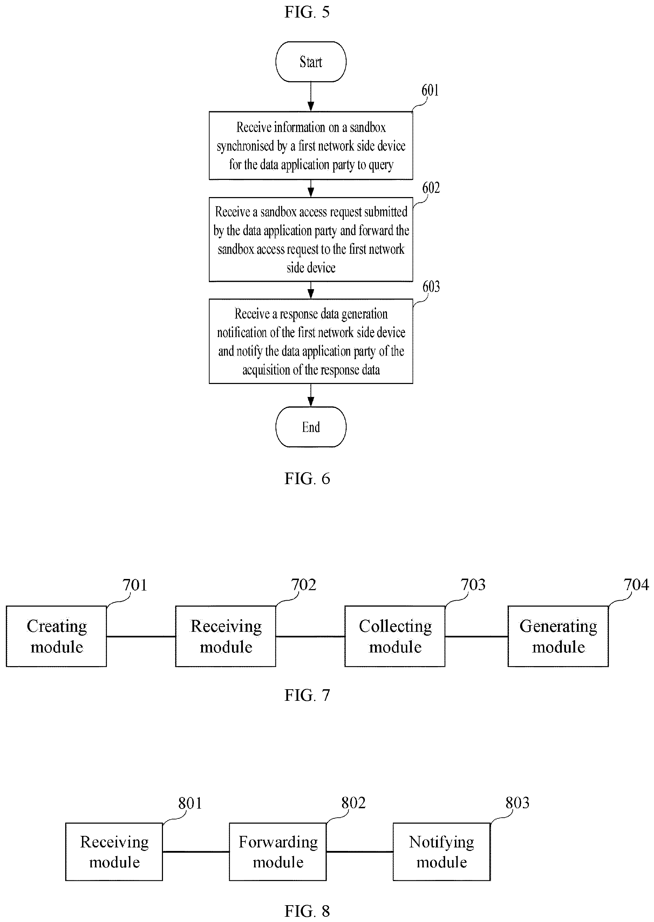

Another embodiment of the present application relates to a data sharing method, applied to a second network side device. In this embodiment, the second network side device provides information on a sandbox for a data application party to query, forwards a sandbox access request submitted by the data application party to a first network side device, and finally notifies the data application party to acquire the data. A specific flow is shown in FIG. 6, including at least, but not limited to, the following steps.

At step 601, information on a sandbox synchronized by a first network side device is received, and the information on the sandbox is provided for the data application party to query. In this embodiment, the data provider provides data for sharing, and the first network side device creates the sandbox for the data provider, publishes the sandbox, and then synchronizes the information on the sandbox to the second network side device. In this step, the second network side device receives the information on the sandbox synchronized by the first network side device, and provides the information on the sandbox for the data application party to query.

The data application party can make a sandbox access request according to their own needs. The sandbox access request issued by the data application party may be oriented to the shared exchange sandbox or the trusted computing sandbox. Accordingly, the data application party may request to acquire part or all of the data or a computing result of the data.

At step 602, a sandbox access request submitted by the data application party is received, and forwarded to the first network side device. The data application party issues the sandbox access request after querying the information on the sandbox through the second network side device, and in this step, the second network side device receives the sandbox access request submitted by the data application party and then forwards the sandbox access request to the first network side device.

At step 603, a response data generation notification of the first network side device is received and the data application party is notified to acquire the response data. In the previous step, the second network side device forwards the sandbox access request submitted by the data application party to the first network side device, and the first network side device processes the data according to the sandbox access request submitted by the data application party. In this step, the second network side device receives the response data generation notification of the first network side device, and notifies the data application party to acquire the response data.

In this embodiment, the second network side device can provide information on the sandbox for the data application party to query, so that the data application party can initiate het sandbox access request according to demand to acquire response data. Meanwhile, the second network side device can further receive the sandbox access request submitted by the data application party and forward the sandbox access request to the first network side device, so as to realize submission of the sandbox access request by the data application party. The data application party submitting a sandbox access request is notified to acquire response data, so that the data application party can acquire the requested data, which can prevent the data from being disclosed to all users and ensure that the private data will not be leaked.

An embodiment of the present application relates to a network side device, as shown in FIG. 7, including:
a creating module 701, configured to create a sandbox for a data provider, and synchronize information on the created sandbox to a second network side device, wherein the sandbox is bound to an original database, and the information on the sandbox includes metadata of the original database;
a receiving module 702, configured to receive a sandbox access request initiated by a data application party and forwarded by the second network side device, wherein the sandbox access request carries metadata of request data;
a collecting module 703, configured to collect, in the original database bound to the sandbox, original data queried on the basis of the metadata of the request data; and
a generating module 704, configured to generate response data to the sandbox access request according to the collected original data, and notify, by means of the second network side device, the data application party to acquire the response data from the sandbox.

In one example, the creating module 701 may be further configured to determine a service type provided by the sandbox according to a sandbox creation request of the data provider, wherein the service type includes shared exchange and trusted computing.

In one example, the generating module 704 may be further configured to upon the condition that the service type provided by the sandbox is shared exchange, desensitize the original data collected by the collecting module 703, encrypt the desensitized data and take the encrypted data as response data to the sandbox access request.

In one example, the generating module 704 may be further configured to upon the condition that the service type provided by the sandbox is trusted computing, encrypt the original data collected by the collecting module 703, push the encrypted original data to the trusted computing environment for computing, encrypt the computing result, and take the encrypted computing result as response data to the sandbox access request.

In one example, the first network side device may further include an approval module (not shown in the figure), configured to after the sandbox access request initiated by the data application party and forwarded by the second network side device is received, generate an approval form according to the sandbox access request initiated by the data application party and notify the data provider to approve the sandbox access request.

In one example, the first network side device may further include an uploading-to-blockchain module (not shown in the figure), configured to upload creation information of the sandbox to the blockchain after the information on the created sandbox is synchronized to the second network side device, wherein the creation information includes one or any combination of: an identifier of the sandbox, an identifier of the data provider, and the metadata of the original database; and upload generation information of the response data to the blockchain after the response data to the sandbox access request is generated, wherein the generation information includes one or any combination of: an identifier of the sandbox, an identifier of the data application party, an identifier of the data provider, information of the response data, and a signature of the data provider.

The network side device provided by this embodiment can create a sandbox for the data provider as a secure trusted environment for data storage and processing. When creating the sandbox, the first network device only collects the metadata of the data provider, and does not need to acquire the original data, which can avoid the leakage of private information caused by the disclosure of the original data. In addition, the request data generated according to the request of the data application party is acquired by the data application party via the second network side device, which can further ensure that the data is not leaked and ensure the safety and reliability of the data sharing process compared with the sharing method of disclosing the data to all users.

An embodiment of the present application relates to a network side device, as shown in FIG. 8, including:
a receiving module 801, configured to receive information on a sandbox synchronized by a first network side device, and provide the information on the sandbox for a data application party to query;
a forwarding module 802, configured to forward a sandbox access request submitted by the data application party to the first network side device; and
a notifying module 803, configured to notify the data application party to acquire response data from the sandbox after receiving a response data generation notification of the first network side device.

The network side device provided by this embodiment can provide information on the sandbox for the data application party to query, so that the data application party can initiate a sandbox access request according to demand to acquire response data. The network side device can also receive the sandbox access request submitted by the data application party and forward the sandbox access request to the first network side device, so as to realize the submission of the sandbox access request by the data application party. The data application party submitting a sandbox access request is notified to acquire response data, so that the data application party can acquire the requested data, which can prevent the data from being disclosed to all users and ensure that the private data will not be leaked.

It is worth mentioning that the modules referred to in the above embodiments of the present application are logical modules, and in practical applications, a logical unit may be a physical unit, a part of a physical unit, or a combination of a plurality of physical units. In addition, in order to highlight the innovative part of the present application, the elements that are less closely related to solving the technical problem addressed by the present application are not introduced in this embodiment, but this does not indicate that other elements are not present in this embodiment.

An embodiment of the present application further provides a data sharing system, including: a first network side device and a second network side device that can implement the above data sharing method.

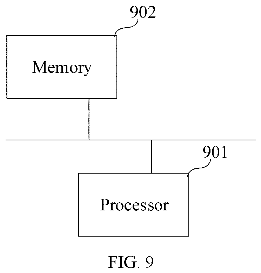

An embodiment of the present application further provides an electronic device, as shown in FIG. 9, including at least one processor 901; and a memory 902 in communication connection with the at least one processor 901, wherein the memory 902 stores instructions executable by the at least one processor 901, and the instructions are executed by the at least one processor 901 to enable the at least one processor 901 to perform the data sharing method described above.

The memory 902 and the processor 901 are connected by a bus, which may include any number of interconnecting buses and bridges, and the bus connects together the various circuits of the one or more processors 901 and the memory 902. The bus may also connect various other circuits, such as peripheral devices, voltage regulators and power management circuits, which are well known in the art, and therefore, will not be further described here. A bus interface provides an interface between the bus and a transceiver. The transceiver may be an element or a plurality of elements, such as a plurality of receivers and transmitters, and provides a unit communicating with various other device on a transmission medium. The data processed by the processor 901 is transmitted on the wireless medium through the antenna, and further, the antenna receives the data and transmits the data to the processor 901.

The processor 901 is responsible for managing the bus and general processing, and may also provide various functions including timing, peripheral interfaces, voltage regulation, power management and other control functions. While the memory 902 may be used to store data used by the processor 901 in performing operations.

The above product can execute the method provided by the embodiment of the present application, has corresponding functional modules and beneficial effects to execute the method, and technical details that are not described in detail in the embodiment may refer to the method provided by the embodiment of the present application.

An embodiment of the present application further provides a computer-readable storage medium, storing a computer program. The computer program, when executed by the processor, implements the data sharing method described above.

Those skilled in the art can appreciate, implementation of all or a portion of the steps of the methods of the embodiments described above may be completed by instructing related hardware through a program, which is stored in a storage medium and includes several instructions to cause a device (which may be a single chip microcomputer, chip, etc.) or a processor to execute all or part of the steps of the methods of various embodiments of the present application. The aforementioned storage medium includes various media in which program codes can be stored, such as a USB flash disk, a mobile hard disk, a read-only memory (ROM), a random access memory (RAM), a magnetic disk, or an optical disk.

The above embodiments are provided to a person having ordinary skill in the art to implement and use the present application, a person skilled in the art may make various modifications or changes to the above-described embodiments without departing from the inventive concept thereof. Accordingly, the scope of the present application should not be limited to the above-described embodiments, but should conform to the widest scope of inventive features set forth in the claims.

## Claims

1. A data sharing method, applied to a first network side device, comprising:
creating a sandbox for a data provider, and synchronizing information on the sandbox to a second network side device, wherein the sandbox is bound to an original database, and the information comprises metadata of the original database;
receiving a sandbox access request initiated by a data application party and forwarded by the second network side device, wherein the sandbox access request carries metadata of request data;
collecting, in the original database bound to the sandbox, original data queried on the basis of the metadata of the request data; and
generating response data to the sandbox access request according to the collected original data, and notifying, by means of the second network side device, the data application party to acquire the response data from the sandbox.

2. The data sharing method according to claim 1, wherein creating the sandbox for the data provider comprises:
determining, according to a sandbox creation request of the data provider, a service type provided by the sandbox, wherein the service type comprises shared exchange and trusted computing; and
creating the sandbox according to the service type.

3. The data sharing method according to claim 2, wherein generating the response data to the sandbox access request comprises:
desensitizing the original data, encrypting desensitized data, and taking encrypted data as the response data to the sandbox access request in the case that the service type provided by the sandbox is shared exchange.

4. The data sharing method according to claim 2, wherein generating the response data to the sandbox access request comprises:
encrypting the original data, pushing encrypted original data to a trusted computing environment for computing, encrypting a computing result, and taking an encrypted computing result as the response data to the sandbox access request in the case that the service type provided by the sandbox is trusted computing.

5. The data sharing method according to any one of claims 1 to 4, wherein after receiving the sandbox access request initiated by the data application party and forwarded by the second network side device, and before collecting , in the original database bound to the sandbox, the original data queried on the basis of the metadata of the request data, the data sharing method further comprises:
notifying, according to the sandbox access request initiated by the data application party, the data provider to approve the sandbox access request; and
collecting, in the original database bound to the sandbox, the original data queried on the basis of the metadata of the request data in the case that the sandbox access request is approved to be passed.

6. The data sharing method according to any one of claims 1 to 5, wherein after synchronizing the information on the created sandbox to the second network side device, the data sharing method further comprises:
uploading creation information of the sandbox to a blockchain, wherein the creation information comprises one or any combination of: an identifier of the sandbox, an identifier of the data provider, and the metadata of the original database; and
after generating the response data to the sandbox access request, the data sharing method further comprises:
uploading generation information of the response data to a blockchain, wherein the generation information comprises one or any combination of: an identifier of the sandbox, an identifier of the data application party, an identifier of the data provider, information of the response data, and a signature of the data provider.

7. A data sharing method, applied to a second network side device, comprising:
receiving information on a sandbox synchronized by a first network side device, and providing the information on the sandbox for a data application party to query;
forwarding a sandbox access request submitted by the data application party to the first network side device; and
notifying the data application party to acquire response data from the sandbox after receiving a response data generation notification of the first network side device.

8. A network side device, comprising:
a creating module, configured to create a sandbox for a data provider, and synchronize information on the sandbox to a second network side device, wherein the sandbox is bound to an original database, and the information comprises metadata of the original database;
a receiving module, configured to receive a sandbox access request initiated by a data application party and forwarded by the second network side device, wherein the sandbox access request carries metadata of request data;
a collecting module, configured to collect, in the original database bound to the sandbox, original data queried on the basis of the metadata of the request data; and
a generating module, configured to generate response data to the sandbox access request according to the collected original data, and notify, by means of the second network side device, the data application party to acquire the response data from the sandbox.

9. A network side device, comprising:
a receiving module, configured to receive information on a sandbox synchronized by a first network side device, and provide the information on the sandbox for a data application party to query;
a forwarding module, configured to forward a sandbox access request submitted by the data application party to the first network side device; and
a notifying module, configured to notify the data application party to acquire response data from the sandbox after receiving a response data generation notification of the first network side device.

10. A data sharing system, comprising the network side device according to claim 8 and the network side device according to claim 9.

11. An electronic device, comprising:
at least one processor; and
a memory in communication connection with the at least one processor, wherein
the memory stores instructions executable by the at least one processor, and the instructions are executed by the at least one processor to enable the at least one processor to perform the data sharing method according to any one of claims 1 to 6, or to enable the at least one processor to perform the data sharing method according to claim 7.

12. A computer-readable storage medium storing a computer program, wherein the computer program, when executed by a processor, implements the data sharing method according to any one of claims 1 to 6, or implements the data sharing method according to claim 7.
